# FASCICULE DE BREVET EUROPEEN

(11) **EP 0 350 349 B1**
(45) Date de publication et mention de la délivrance du brevet: **19.01.1994**
(21) Numéro de dépôt: 89401654.2
(22) Date de dépôt: 14.06.1989
(51) Int. Cl.: F26B 11/16, F26B 25/04, F26B 3/00, C02F 11/00

(54) **Procédé et installation pour la dessiccation de déchets organiques**
Verfahren und Vorrichtung zur Trocknung von organischen Abfällen
Process and apparatus for the treatment of organic waste

(30) Priorité: 07.07.1988 FR 8809209
(43) Date de publication de la demande: 10.01.1990
(73) Titulaire: HENRIPRE ET CIE S.A., F-51001 Chalons sur Marne (FR)
(72) Inventeur: Henripre, André, 51000 Châlons sur Marne (FR)
(74) Mandataire: Hirsch, Marc-Roger

(56) Documents cités:
- EP-A- 0 210 966
- EP-A- 0 231 584
- CH-A- 261 696
- DE-A- 3 011 377
- DE-C- 45 080
- FR-A- 331 712
- FR-A- 1 307 651
- FR-A- 2 252 989
- FR-A- 2 545 388
- FR-A- 2 593 091
- US-A- 3 678 596

## Description

La présente invention se rapporte à un procédé de dessiccation de déchets organiques comportant une déshydratation à l'aide d'un flux gazeux caloporteur divisé en deux courants, le premier assurant un réchauffage indirect de la masse de déchets organiques dans une cuve, le second courant étant injecté dans ladite masse qui est agitée mécaniquement. Elle se rapporte en outre à une installation pour le traitement, en particulier la dessiccation, de déchets organiques mettant en oeuvre ledit procédé. Elle se rapporte, en outre à l'application d'un tel procédé et d'une telle installation à l'épuration de déchets organiques et au traitement de boues résiduaires.

FR-A-2 545 388 se rapporte à un procédé pour le traitement de déchets organiques ainsi qu'à une installation pour la mise en oeuvre de ce procédé.
Le procédé mis en oeuvre dans cette invention comporte une phase de séchage à l'aide d'un flux de gaz caloporteur dans lequel le gaz caloporteur est divisé en deux courants, le premier assurant le réchauffage indirect de la masse des déchets contenue dans une cuve, puis étant rejeté à l'atmosphère le cas échéant après échange thermique avec un courant d'air frais, tandis que le deuxième courant, pendant la phase de séchage, est injecté dans ladite masse qu'il traverse, et qui est agitée mécaniquement.
Le gaz caloporteur provient de la combustion d'un foyer, vers lequel sont dirigés les gaz refroidis et les gaz d'exhaure aspirés en haut de la cuve, par exemple, à travers un cyclone.
Les gaz d'exhaure chargés en impuretés malodorantes peuvent, avant d'être utilisés comme carburant, subir une dégradation thermique assurant la désodorisation. Une installation de cuisson, déshydratation et stérilisation-dessiccation de ce genre, pour le traitement de déchets organiques, a été décrite en détail dans le brevet français précité.

Les installation du genre décrit dans ce document donnent, généralement, des résultats satisfaisants pour le traitement des déchets organiques, en particulier des résidus de tannerie et d'équarrissage. Il est cependant apparu que de tels procédés utilisant un cycle discontinu et des installations dans lesquelles le brassage mécanique est réalisé au moyen de herses rotatives d'axe vertical ne convenaient pas au traitement des boues résiduaires de stations d'épuration urbaines, en vue de la déshydratation de ces boues.

En effet, ces boues résiduaires ont des propriétés physiques et des consistances chimiques très différentes.

Ces boues ont généralement été prétraitées par des floculants tels que des polyélectrolytes et ont subi une pré-déshydratation mécanique par filtre-presses ou procédés équivalents.

Une première difficulté par rapport au procédé mis en oeuvre dans FR-A-2 545 388, réside dans le fait que ces boues prétraitées se présentent, du point de vue rhéologique, sous l'aspect d'une masse compacte et collante.

La présente invention permet de pallier cette première difficulté par modification de l'état physique collant des boues avant leur déshydratation par contact avec les gaz chauds. La solution, pour satisfaire cette condition spécifique liée à ces boues collantes, consiste à mélanger et malaxer intimement une proportion de produit sec avec la boue fraîche, de façon à obtenir une masse de texture friable et poreuse aux gaz chauds injectés au sein même de cette masse. L'évaporation de l'humidité de ces boues se fera alors dans les meilleures conditions.

Une deuxième difficulté par rapport au procédé mis en oeuvre dans le document précité, réside d'autre part dans le fait, qu'après la pré-déshydratation mécanique, ces boues contiennent 20 à 25% de matières sèches, c'est-à-dire encore: 75 à 80% de leur poids en eau, de sorte qu'après déshydratation thermique, le volume initial de remplissage se réduit à environ un quart du volume en produit sec. En fin du cycle discontinu utilisé dans le document précité, la hauteur de plongée des tubes d'injection devenant très faible, l'échange de chaleur n'a plus le temps de se faire correctement; le rendement de la convection devient nettement insuffisant. D'autre part, il en résulte que la durée du cycle s'allonge considérablement.

De ce fait, le procédé utilisé et les moyens mis en oeuvre ne conviennent pas au traitement des boues résiduaires des stations d'épuration urbaines, en vue de la déshydratation de ces boues.

Pour traiter les boues résiduaires dans de bonnes conditions, il s'avère donc nécessaire de modifier et d'améliorer à la fois le procédé et les moyens permettant sa mise en oeuvre.

La présente invention a notamment pour objet un procédé et une installation de traitement de déchets organiques permettant, en particulier, de traiter et notamment de déshydrater des boues résiduaires.

Le procédé, conforme à l'invention, est caractérisé en ce qu'il comprend les quatre phases suivantes:
- une première phase dite phase de remplissage-malaxage, consistant à mélanger une masse des déchets organiques à traiter avec du produit sec provenant du traitement, permettant d'obtenir en fin d'opération de remplissage de la cuve, une masse de produit constituée du produit sec et de la boue fraîche, intimement mélangés, présentant une texture friable et poreuse;
- une deuxième phase dite phase de déshydratation-gavage, dans laquelle la déshydratation est assurée par ledit flux gazeux caloporteur et dans laquelle la masse d'eau évaporée est remplacée au fur et à mesure par un volume équivalent de boue fraîche afin de maintenir constamment le niveau de matière à sa cote maximum dans la cuve;
- une troisième phase dite phase de déshydratation-finition permettant de terminer la déshydratation de la masse jusqu'à obtention du degré de siccité final voulu du produit déshydraté;
- la quatrième phase dite phase de vidange de la cuve, lors de laquelle une partie du produit déshydraté obtenu est toutefois laissée au fond de la cuve, pour le cycle suivant, au cours duquel sera effectué le mélange avec la boue fraîche amenée au cours de la première phase.
Ce procédé est en outre défini par le contenu des revendications 2 à 6.

La cuve est généralement alimentée à partir de trémies de stockage des boues fraîches, par l'intermédiaire d'une vis de transport et d'un élévateur.

Par son principe même, les gaz d'exhaure de la cuve étant aspirés à l'aide d'un ventilateur centrifuge par l'intermédiaire d'un conduit d'aspiration et d'un cyclone branchés à la partie haute de la cuve, l'intérieur de la cuve se trouve en dépression par rapport à la pression atmosphérique extérieure, ceci en fonction de la hauteur de plongée des tubes injecteurs dans la matière à traiter.

En fait, le dispositif d'alimentation en boues de la cuve assume les fonctions suivantes: d'une part, avec une étanchéité relative, la séparation entre l'extérieur se trouvant à la pression atmosphérique et l'intérieur de la cuve se trouvant en dépression, et d'autre part, l'alimentation en boues de la cuve avec un débit variable, ceci en particulier durant la phase de déshydratation.

Les avantages du cycle dit semi-discontinu par rapport au simple cycle discontinu, sont essentiellement de deux ordres:

Premièrement, maintien, après la phase de remplissage-malaxage, du niveau du produit dans la cuve, à son maximum pendant toute la durée de la phase de déshydratation. Ceci permet de maintenir une hauteur de plongée constante aux tubes d'injection des gaz chauds. Il en résulte que la puissance thermique développée par le générateur et, par voie de conséquence, la puissance évaporatoire sera maximum.

Deuxièmement, en fin de cycle semi-discontinu, la cuve du déshydrateur sera remplie à sa pleine capacité en produit sec; ceci permet le traitement d'un maximum de boues fraîches par cycle et l'utilisation optimum de la capacité de l'appareil et donc une rentabilité maximum.

Il a déjà été dit plus haut que les boues résiduaires présentent des caractéristiques chimiques et rhéologiques très variées suivant leur origine. Dans des cas particulièrement difficiles, l'expérience a montré qu'il était quelquefois nécessaire de procéder à un pré-mélange à température ambiante du produit sec avec les boues fraîches avant de les mettre en contact avec les gaz chauds dans le déshydrateur; ceci permet d'éviter la formation d'une peau isolante autour des particules à déshydrater.

Deux adaptations du procédé sont proposées pour résoudre des cas particuliers.

Dans une première adaptation du procédé conforme à l'invention, dès la première phase de remplissage et durant la deuxième phase de déshydratation, on procède à une extraction, à faible débit du produit sec de la cuve à l'aide de la vie de vidange et on téintroduit celui-ci, après passage dans un broyeur-calibreur, dans la vis d'alimentation amenant les boues fraîches, cette vis, de préférence à double rotor, devenant ainsi vis de pré-mélange dans la deuxième partie de son parcours, le produit ainsi pré-mélangé ayant une texture friable et poreuse avant son introduction dans la cuve de déshydratation.

La vis d'extraction est munie d'une double enveloppe de refroidissement par eau permettant, si ceci s'avère nécessaire, de refroidir le produit extrait de la cuve et de faire l'opération de pré-mélange à température ambiante.

Dans une deuxième adaptation du procédé conforme à l'invention, le produit sec nécessaire au pré-mélange sera prélevé dans un silo auxiliaire, alimenté en produit sec lors de l'opération de vidange de la cuve en fin de cycle, ce produit sec étant comme dans le cas précédent et après passage dans le concasseur-calibreur, réintroduit dans la vis d'alimentation faisant office de vis de mélange.

Le procédé conforme à l'invention peut être mis en oeuvre à l'aide de l'installation décrite ci-après.

L'installation, selon l'invention, comprend de manière connue une cuve destinée à recevoir la masse des déchets à traiter et contenant des moyens de malaxage de ces déchets, des moyens de chauffage des déchets par un flux de gaz caloporteur provenant d'un générateur, ces moyens de chauffage consistant en un premier courant du gaz circulant dans la double paroi de la cuve et un second courant de ce gaz circulant au sein de la masse en cours de malaxage, caractérisée en ce que les moyens de malaxage comprennent deux arbres horizontaux parallèles disposés de façon sensiblement symétrique par rapport au plan vertical de symétrie de la cuve et comportant des pales radiales de hauteur uniforme et régulièrement espacées sur chaque arbre selon un même pas, en ce que ces deux arbres sont accouplés en rotation à un groupe moteur, en ce que les moyens de chauffage comprennent une série d'injecteurs partant d'un répartiteur alimenté en gaz caloporteur, disposé en haut de la cuve et descendant entre les pales jusqu'au voisinage du fond de cette cuve, en ce que la cuve présente, à sa partie supérieure, un orifice de chargement relié par l'intermédiaire d'une écluse rotative d'alimentation, assurant une étanchéité relative entre sa face d'entrée et sa face de sortie, à une vis d'alimentation à vitesse réglable alimentée à partir d'un silo en matière fraîche à traiter, et en ce qu'un orifice de déchargement en fond de cuve est associé à une vis d'extraction placée dans une double enveloppe inclinée, amenant la matière déchargée vers une écluse d'où partent deux conduits: l'un dirigé vers un silo de stockage, l'autre vers un broyeur déchargeant sur la vis d'alimentation reliée à l'écluse rotative d'alimentation.

Selon un mode de réalisation de l'appareillage selon l'invention, les arbres sont entraînés en rotation dans le même sens et à la même vitesse, et sont espacés l'un de l'autre d'une distance légèrement supérieure à la hauteur des pales.

Selon un autre mode de réalisation de l'appareillage selon l'invention, chaque pale est formée d'une plaque allongée, en forme générale de trapèze, fixée sur l'arbre par la petite base du trapèze, de manière que l'axe de la pale coïncide avec un rayon d'une section transversale de l'arbre et que le plan de chaque pale fasse un même angle avec l'axe de l'arbre, cet angle étant inversé d'un arbre à l'autre.

Selon un autre mode encore de réalisation de l'appareillage selon l'invention, pour chaque arbre, on passe d'une pale à la suivante par une rotation de même sens pour les deux arbres et d'un angle de 90° autour de l'axe de cet arbre.

Selon une forme d'exécution de l'appareillage selon l'invention, les arbres sont calés angulairement l'un par rapport à l'autre de manière qu'à chaque pale de l'un des arbres corresponde, à proximité immédiate, une pale de l'autre arbre, d'axe parallèle à celui de ladite pale et de même orientation par rapport à l'arbre, les pales des deux arbres se correspondant ainsi par groupes de deux.

Selon une autre forme d'exécution de l'appareillage selon l'invention, les arbres sont décalés axialement l'un par rapport à l'autre de manière que, pour chaque groupe de deux pales, les plans balayés par les bords de fuite, ou bords arrière, des pales dans leur rotation soient de part et d'autre et très proches d'un plan transversal commun.

Selon une autre forme encore d'exécution de l'appareillage selon l'invention, l'enveloppe intérieure de la cuve à double paroi épouse avec un léger jeu dans sa partie inférieure, le contour du volume balayé par les pales, tandis que ses parois latérales verticales sont sensiblement tangentes à ce volume.

Selon encore une autre forme d'exécution de l'appareillage selon l'invention, les injecteurs consistent en une série de tubes descendant verticalement d'un répartiteur jusqu'au voisinage du fond de la cuve et disposés dans des plans transversaux entre deux groupes consécutifs de pales.

De préférence, dans chaque plan transversal, les injecteurs comprennent deux tubes disposés entre les arbres et, de part et d'autre de ceux-ci, deux autres tubes, l'ensemble des tubes étant réuni transversalement et longitudinalement par des entretoises.

En fait, l'appareillage est tel que défini dans les revendications 8 à 16.

L'invention a en outre pour objet l'application d'une telle installation au traitement de déchets organiques constitués par des boues résiduaires de stations d'épuration.

Grâce à ces dispositions et à d'autres décrites ci-après, on parvient à un traitement efficace des boues résiduaires, ce que ne permettaient pas les autres installations connues de ce genre.

Les caractéristiques et avantages de l'invention ressortiront d'ailleurs mieux de la description suivante donnée uniquement à titre d'exemple non limitatif en référence aux dessins annexés, dans lesquels:
- la figure 1 représente un schéma d'ensemble du procédé de traitement selon l'invention.
- les figures 2 et 3 sont des vues en coupe, respectivement longitudinale et transversale de la cuve de l'installation de la figure 1, montrant la disposition des arbres de malaxage et des injecteurs de gaz;
- les figures 4 et 5 montrent plus en détail, respectivement en plan et en bout, les arbres de malaxage équipant la cuve des figures 2 et 3, avec la disposition des pales et, pour la figure 5, la disposition des conduits d'injection par rapport auxdites pales.
- les figures 6 et 7 montrent des diagrammes du procédé de déshydratation avec la représentation d'une application d'un cycle semi-discontinu, avec en particulier ses 4 phases Ph1, Ph2, Ph3 et Ph4, ainsi que l'évolution des différentes masses de matières dans le déshydrateur au cours d'un cycle.

L'installation selon l'invention, dans le mode de réalisation choisi et représenté dans son ensemble sur les figures, comprend une cuve horizontale 1 destinée à recevoir la matière à traiter et comportant, à cet effet, un orifice de chargement 2 à sa partie supérieure et un orifice de déchargement 3 en fond de cuve.

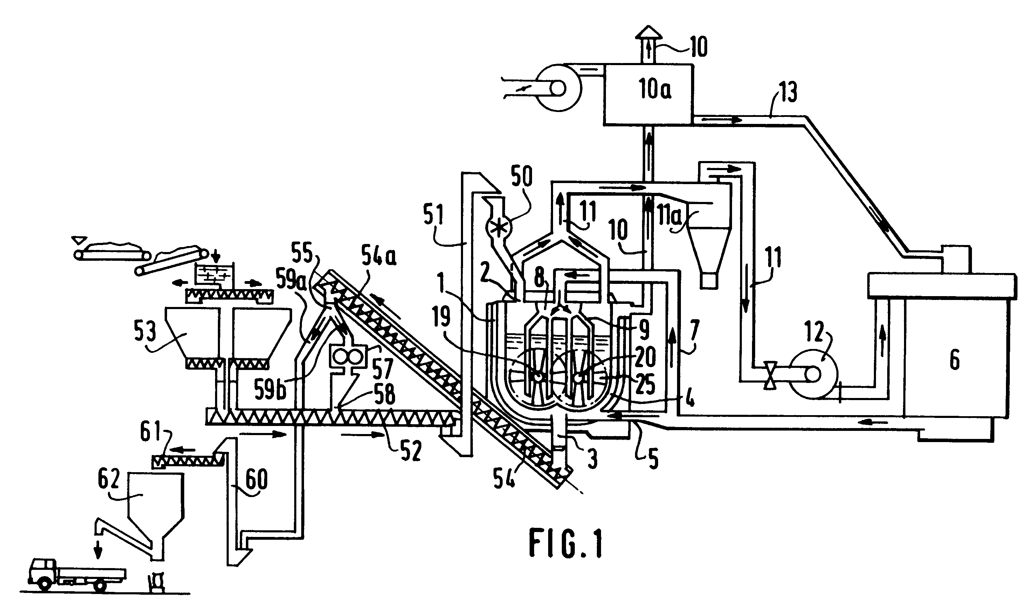

Cette cuve 1, comme on le voit sur les figures 1 à 3, comporte une double paroi, l'enceinte intérieure 4 ainsi ménagée étant raccordée, par un conduit 5 d'arrivée d'un premier courant de gaz caloporteur, à un générateur de gaz chauds 6. Ce conduit 5 comporte une dérivation 7 qui aboutit, à la partie supérieure de la cuve 1, à un répartiteur 8 distribuant un second courant de gaz caloporteur vers des injecteurs tubulaires verticaux 9 sur lesquels on reviendra ci-après.

Les gaz refroidis provenant du premier courant de gaz caloporteur sont évacués, après traversée de l'enceinte intérieure 4, par une cheminée 10 et participent éventuellement à un échange thermique avec un courant d'air frais passant dans l'échangeur de chaleur logé dans le caisson 10a et envoyé vers le générateur 6.

Les gaz d'exhaure sont collectés, au-dessus de la masse traitée et malaxée, par des conduits se réunissant en un conduit 11 et sont ramenés vers le générateur 6, éventuellement après passage à travers un cyclone 11a, la conduite 11 et un ventilateur 12.

Comme cela a déjà été mentionné, les gaz d'exhaure chargés d'impuretés et refoulés dans le générateur 6 par le ventilateur 12, sont avantageusement soumis à une dégradation thermique qui les débarrasse de leurs composants malodorants. Ils sont ensuite utilisés comme carburant dans le générateur 6 et fortement réchauffés avec les gaz éventuellement recyclés.

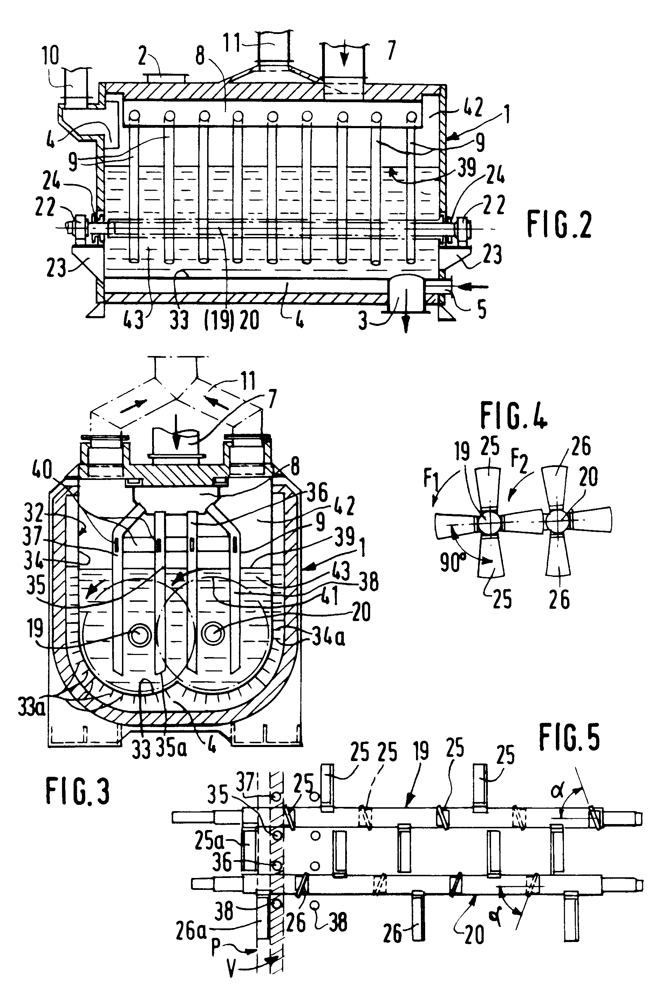

Selon une caractéristique essentielle de l'invention, deux arbres de malaxage 19 et 20 sont disposés dans la cuve 1, à la partie inférieure de celle-ci. Chacun de ces deux arbres 19, 20 est monté à rotation entre deux paliers 22 montés sur des consoles 23 fixées extérieurement sur les parois transversales de la cuve 1 (figure 2); pour la traversée de ces parois, les arbres et lesdites parois sont équipés de moyens d'étanchéité, tels que des joints tournants ou dispositifs analogues à labyrinthes 24. Les deux arbres, parallèles à l'axe longitudinal de la cuve 1, sont disposés dans un même plan horizontal et symétriquement par rapport au plan vertical de symétrie de la cuve.

Chaque arbre est muni de pales radiales respectives 25, 26, régulièrement espacées selon un même pas le long de l'arbre. Chaque pale est formée d'une plaque ayant sensiblement la forme d'un trapèze allongé selon sa hauteur et qui est fixé sur l'arbre par sa petite base, de manière que l'axe de la pale coïncide avec un rayon d'une section transversale de l'arbre et que le plan de chaque pale fasse un même angle alpha avec l'axe de l'arbre, cet angle étant inversé d'un arbre à l'autre (cf. figure 3). De plus, pour chaque arbre, on passe d'une pale à la suivante par une rotation de même sens pour les deux arbres et d'un angle de 90° autour de l'axe de cet arbre.

Les deux arbres sont accouplés l'un à l'autre, par tout moyen approprié tel qu'un engrenage et sont entraînés ensemble en rotation dans le même sens et à la même vitesse (flèches F1 et F2 de la figure 4) par un groupe moto-réducteur (non représenté). Les arbres sont calés angulairement de manière, qu'en permanence, à chaque pale 25 (par exemple la pale 25a) de l'arbre 19 corresponde, à proximité immédiate, une pale 26 (ici 26a) de l'arbre 20 d'axe parallèle à celui de ladite pale 25 et de même orientation par rapport à l'arbre, les pales 25 et 26 se correspondant ainsi par groupes de deux figures 4 et 5.

De plus, les arbres sont décalés axialement l'un par rapport à l'autre de manière que, pour chaque groupe de deux pales, les plans balayés par les bords de fuite (ou bords arrière) des pales dans leur rotation soient, de part et d'autre, très proches d'un plan transversal commun P (figure 5).

Les deux arbres 19 et 20 sont espacés l'un de l'autre d'une distance légèrement supérieure à la hauteur d'une pale et l'enveloppe intérieure 32 de la cuve à double paroi 1 épouse avec un léger jeu, dans sa partie inférieure 33, le contour du volume à deux lobes, balayé par les pales, tandis que ses parois latérales, verticales 34, sont sensiblement tangentes à ce volume.

Entre les groupes consécutifs de pales 25, 26 tels que 25a, 26a, il existe une succession de volumes V en forme de galette aplatie (dont l'un est représenté en hachures à la figure 5) non balayés par lesdites pales et dans lesquels sont logés les injecteurs 9, disposés dans des plans transversaux parallèles. Ces injecteurs 9 consistent, pour chaque volume V, en deux tubes verticaux 35, 36, partant du fond du répartiteur 8 et descendant jusqu'au voisinage de la partie inférieure 33 de l'enceinte intérieure 4, entre les arbres 19 et 20 et, de part et d'autre des arbres 19, 20, et en deux autres tubes 37 et 38 partant obliquement du répartiteur 8 et descendant ensuite verticalement jusqu'au voisinage du fond 33. Des entretoises 40 réunissent entre eux les différents tubes, transversalement et longitudinalement pour assurer la rigidité de l'ensemble (figure 3) et éviter que les tubes verticaux n'entrent en vibration.

Grâce à ces injecteurs, le gaz caloporteur arrivant au répartiteur 8 pénètre au sein de la masse à traiter qui est malaxée très complètement puisqu'il ne subsiste pratiquement pas d'espace non balayé entre l'enveloppe 32 et les pales 25, 26. On constate, en outre, que l'effet de malaxage obtenu grâce à cette disposition, permet d'injecter correctement des gaz chauds à l'intérieur des boues résiduaires. Il va de soi que cette installation permet également de traiter d'autres matériaux plus faibles à traiter parce que moins collants et pâteux.

En fait, l'orifice de déchargement 3 en fond de cuve 1 est associé à une vis d'extraction 54 placée dans une double enveloppe inclinée 54a amenant la matière déchargée vers une écluse 55 de laquelle partent deux conduits, l'un 59a amenant la matière vers une chaîne à godets 60 qui la conduit par une vis d'alimentation 61 vers un silo 62, et l'autre 59b amenant la matière vers un appareil de broyage ou concasseur 57 éventuellement précédé d'un silo auxiliaire (non représenté) puis vers la partie médiane d'une vis d'alimentation 52, dont une extrémité est alimentée à partir d'un silo 53 de matière fraîche à traiter, et qui dans la deuxième partie de son parcours, fait office de vis pré-mélangeuse amenant le produit à un conduit ascendant 51, comportant des moyens tels qu'une chaîne a godets ou autres permettant d'amener du mélange ou de la matière fraîche par une écluse rotative d'alimentation 50 dans la cuve 1 pour qu'elle y soit traitée. Le silo auxiliaire placé sur la conduite 59b permet le stockage du produit sec nécessaire au pré-mélange.

Le fonctionnement de l'installation qui vient d'être décrite s'imagine aisément par comparaison avec le brevet antérieur cité précédemment. Quoique le fonctionnement de cette installation soit décrit en relation avec le traitement de boues résiduaires, il est entendu que n'importe quels déchets organiques peuvent être traités dans cette installation.

Les boues résiduaires introduites par l'orifice de chargement 2 remplissent l'intérieur de l'enveloppe 32 de la cuve 1 jusqu'à un niveau 39 situé sensiblement à mi-distance du point haut 41 des pales 25 et des entretoises 40.

Les gaz chauds caloporteurs qui proviennent du générateur 6 fonctionnant en incinérateur des gaz malodorants et qui sont amenés au conduit d'arrivée 5, traversent l'enceinte intérieure 4 en échauffant les parois inférieures 33 et latérales 34 par l'intermédiaire des ailettes respectives 33a et 34a d'échange de chaleur et sont ensuite évacués à la cheminée 10 après avoir, le cas échéant, cédé une partie de leur chaleur résiduaire, par exemple à l'air de combustion du générateur 6 dans un échangeur 10a (ou à de l'air de circulation du générateur 6 lorsque ce générateur est, par exemple, chauffé à l'électricité).

Les gaz caloporteurs, amenés par les tubes 35 et injectés au sein de masse de produit finissent par déboucher au-dessus de la surface 39 des boues résiduaires après avoir cédé leur chaleur à la boue qui perd progressivement son eau qui s'évapore et s'évacue dans l'espace 42, au-dessus de la surface supérieure 39 de la boue. La vapeur d'eau et les gaz de séchage et de décomposition issus de la masse de boues résiduaires 43 sont aspirés par les conduits 11, sont soumis dans le générateur 6 à une incinération qui détruit leurs phases malodorantes, sont introduits, pour partie, dans l'enceinte intérieure 4 et sont évacués finalement à la cheminée 10 après refroidissement.

Les essais effectués sans malaxage de la boue 43 ont montré qu'il était pratiquement impossible d'injecter économiquement les gaz caloporteurs dans une masse de boue collante afin d'obtenir un bon coefficient d'échange de chaleur par contact direct entre les gaz chauds (à des températures pouvant atteindre 600°C) et la boue.

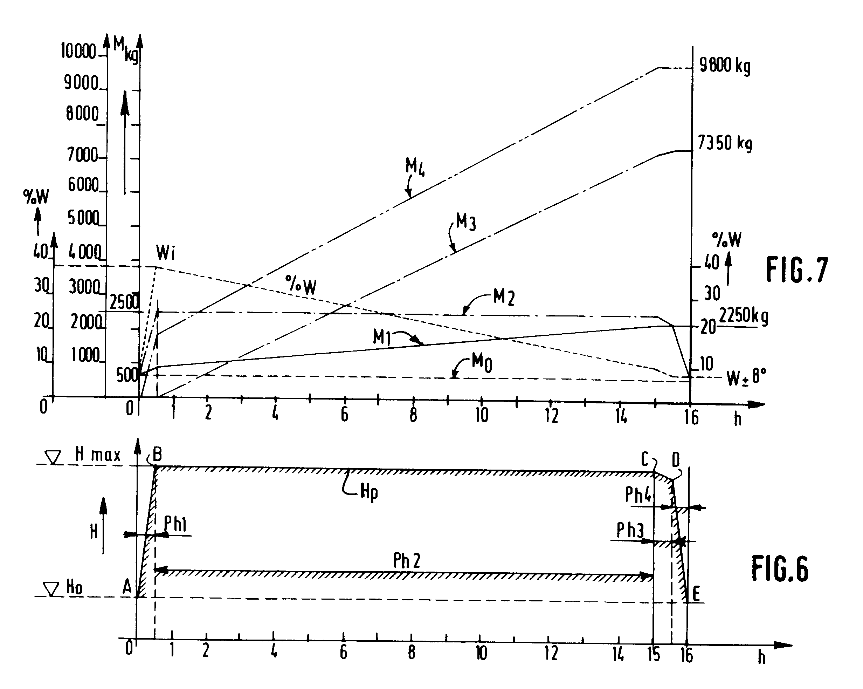

Le procédé selon l'invention, utilise un cycle semi-discontinu dont le déroulement est représenté par les diagrammes des figures 6 et 7 qui correspondent au schéma général de la figure 1. Les diagrammes ont été établis à titre d'exemple, pour un déshydrateur d'une capacité de 2 500 litres et sur une durée totale du cycle (portée en heures en abscisse) de 16 heures, ce qui correspond à 2 tranches de travail de 8 heures. La puissance du générateur a été admise égale à 500 kW.

Dans le diagramme de la figure 6, l'ordonnée représente la hauteur H du produit dans la cuve du déshydrateur. La hauteur initiale du produit sec est représentée par Ho. La hauteur après remplissage est H max.

Le diagramme de la figure 7 montre l'évolution des masses de matières dans le déshydrateur. Mo est la masse initiale de produit sec. M1 est la courbe des masses de matières sèches. M2 est la courbe de la masse de produit dans la cuve. M3 représente la masse cumulée d'eau évaporée. M4 représente la masse cumulée des boues traitées. W est la courbe d'évolution du pourcentage d'humidité dans le produit traité dans la cuve.

La première phase de remplissage-malaxage Ph1 est réalisée en 30 minutes. Durant cette période, l'écluse rotative 50 fonctionne à plein régime et alimente la cuve 1 en produit frais à traiter, les deux rotors mélangent alors intimement le produit frais avec le produit sec laissé au fond de la cuve (Ho représente par exemple 20% du volume). Lorsque, à la fin de cette phase la cuve est remplie à son niveau H max., le produit se présente normalement sous l'aspect d'une masse friable.

La deuxième phase de déshydratation-gavage Ph2, a une durée totale de 14,5 heures. Les flux de gaz chaud injecté et de gaz d'exhaure ainsi que les rotors sont en action. L'écluse 50 est commutée en régime de gavage et remplace au fur et à mesure la masse d'eau évaporée par du produit frais à traiter, de sorte que, durant toute cette phase, le niveau du produit Hp dans la cuve est maintenu constant et égal à H max.

Après 15 heures de fonctionnement, débute la troisième phase de déshydratation-finition Ph3 qui dure 30 minutes. L'alimentation est alors complètement arrêtée. La déshydratation se poursuit et le produit atteint la siccité finale Wo = 8%.

Le cycle semi-discontinu se termine par la quatrième phase de vidange Ph4 du déshydrateur, ladite phase étant représentée par le tronçon de courbe D. Le point E à la fin de cette phase, indique que le produit sec restant dans le fond de la cuve 1 se retrouve au niveau Ho, qui constitue donc la phase préparatoire pour le début, au point A, du cycle semi-discontinu suivant.

Le diagramme 7 met en évidence les avantages essentiels du cycle semi-discontinu.

La hauteur du produit traité dans la cuve reste constante, ce qui permet à l'installation de fonctionner durant toute la deuxième phase de déshydratation à la puissance évaporatoire maximum et par là, à un rendement optimun. De même le gavage du déshydrateur durant toute la deuxième phase permet, dans l'exemple donné, de traiter une masse totale de déchets M4 = 9 800 kg pour une capacité de la cuve de 2 500 litres, donc sensiblement 4 fois plus qu'il ne serait possible de traiter dans une installation fonctionnant suivant un simple cycle discontinu. La quantité d'eau évaporée totale sera M3 = 7 350 kg, et la quantité de produit déshydraté sera M1 = 2 250 kg.

L'écluse d'alimentation 50 assure une étanchéité relative entre le domaine extérieur et l'intérieur de la cuve se trouvant en dépression, ladite écluse fonctionnant à débit variable.

Pour les cas des boues présentant, par leur origines, des états rhéologiques très collants et difficiles à traiter, deux adaptations différentes du procédé sont proposées selon le cas.

Selon la figure 1, conformément à une première variante du procédé selon l'invention, la vis d'extraction 54 prélève, durant la deuxième phase de déshydratation, un faible débit par l'orifice 3 de la cuve 1, ce produit, après refroidissement éventuel par la double enveloppe 54a, étant amené par l'écluse 55 à travers le concasseur 57, à l'ouverture de réintroduction 58, dans la vis d'alimentation 52, cette vis faisant alors office, dans la deuxième partie de son parcours, de vis pré-mélangeuse et donnant au produit ainsi mélangé une texture friable et poreuse, à température ambiante, avant son introduction dans la cuve 1.

Selon une variante de la figure 1, comportant un silo auxiliaire sur la conduite 59b en amont du concasseur 57, le produit sec nécessaire au pré-mélange est prélevé dans le silo auxiliaire qui est rempli de produit sec lors de l'opération de vidange du déshydrateur; ce produit après passage dans le concasseur est réintroduit dans la vis 52 en 58 comme précédemment.

Bien entendu la présente invention n'est pas limitée aux modes de réalisation décrits et représentés, mais elle est susceptible de nombreuses variantes accessibles à l'homme de l'art sans que l'on s'écarte de l'esprit de l'invention. Ainsi, une telle installation permet le traitement de n'importe quels déchets organiques, les conditions opératoires devant, le cas échéant, être adaptées selon les déchets traités.

## Revendications

1. Procédé de dessiccation de déchets organiques comportant une déshydratation à l'aide d'un flux gazeux caloporteur divisé en deux courants, le premier assurant un réchauffage indirect de la masse de déchets organiques dans une cuve, le second courant étant injecté dans ladite masse qui est agitée mécaniquement, procédé comprenant les quatre phases suivantes:
- une première phase dite phase de remplissage-malaxage, consistant à mélanger une masse des déchets organiques à traiter avec du produit sec provenant du traitement, permettant d'obtenir en fin d'opération de remplissage de la cuve, une masse de produit constituée du produit sec et de la boue fraîche, intimement mélangés, présentant une texture friable et poreuse;
- une deuxième phase dite phase de déshydratation-gavage, dans laquelle la déshydratation est assurée par ledit flux gazeux caloporteur et dans laquelle la masse d'eau évaporée est remplacée au fur et à mesure par un volume équivalent de boue fraîche afin de maintenir constamment le niveau de matière à sa cote maximum dans la cuve;
- une troisième phase dite phase de déshydratation-finition permettant de terminer la déshydratation de la masse jusqu'à obtention du degré de siccité final voulu du produit déshydraté;
- la quatrième phase dite phase de vidange de la cuve, lors de laquelle une partie du produit déshydraté obtenu est toutefois laissée au fond de la cuve, pour le cycle suivant, au cours duquel sera effectué le mélange avec la boue fraîche amenée au cours de la première phase.

2. Procédé selon la revendication 1, caractérisé en ce que, dans la phase de déshydratation-gavage, les déchets organiques sont alimentés à débit variable.

3. Procédé selon la revendication 1 ou 2, caractérisé en ce que, durant les phases de remplissage-malaxage et de déshydratation-gavage, n'est extrait qu'un faible débit du produit sec, ou à l'état friable, contenu dans la cuve, lequel est retourné, après passage dans un broyeur-calibreur, à la vis d'alimentation en produit frais fonctionnant comme mélangeuse.

4. Procédé selon la revendication 1 ou 2, caractérisé en ce que, durant les phases de remplissage-malaxage et de déshydratation-gavage, le produit sec introduit, après passage dans un broyeur-calibreur, par la vis d'alimentation en produit frais, fonctionnant comme mélangeuse, est prélevé dans un silo auxiliaire, dont le remplissage est assuré à chaque fin de cycle par la vis d'extraction.

5. Procédé selon les revendications 1 à 4, caractérisé en ce que, dans la première phase dite de remplissage-malaxage, l'alimentation se déroule à plein régime.

6. Procédé selon les revendications 1 à 5, caractérisé en ce que, dans la deuxième phase dite de déshydratation-gavage, l'alimentation est commutée en régime d'alimentation réduite.

7. Installation pour la mise en oeuvre du procédé selon les revendications 1 à 6, comprenant une cuve destinée à recevoir la masse des déchets à traiter et contenant des moyens de malaxage de ces déchets, des moyens de chauffage des déchets par un flux de gaz caloporteur provenant d'un générateur, ces moyens de chauffage consistant en un premier courant du gaz circulant dans la double paroi de la cuve et un second courant de ce gaz circulant au sein de la masse en cours de malaxage, caractérisée en ce que les moyens de malaxage comprennent deux arbres horizontaux (19, 20) parallèles disposés de façon sensiblement symétrique par rapport au plan vertical de symétrie de la cuve (1) et comportant des pales radiales (25, 26) de hauteur uniforme et régulièrement espacées sur chaque arbre selon un même pas, en ce que ces deux arbres sont accouplés en rotation à un groupe moteur (30), en ce que les moyens de chauffage comprennent une série d'injecteurs (9) partant d'un répartiteur (8) alimenté en gaz caloporteur, disposé en haut de la cuve et descendant entre les pales jusqu'au voisinage du fond (33) de cette cuve, en ce que la cuve (1) présente, à sa partie supérieure, un orifice de chargement (2) relié par l'intermédiaire d'une écluse rotative d'alimentation (50), assurant une étanchéité relative entre sa face d'entrée et sa face de sortie, à une vis d'alimentation à vitesse réglable (52) alimentée à partir d'un silo (53) en matière fraîche à traiter, et en ce qu'un orifice de déchargement (3) en fond de cuve est associé à une vis d'extraction (54) placée dans une double enveloppe inclinée (54a), amenant la matière déchargée vers une écluse (55) d'où partent deux conduits: l'un (59a) dirigé vers un silo de stockage (62), l'autre (59b) vers un broyeur (57) déchargeant sur la vis d'alimentation reliée à l'écluse rotative d'alimentation (50).

8. Installation selon la revendication 7, caractérisée en ce que la vis d'alimentation (52) est constituée par une vis mélangeuse à deux rotors parallèles, à l'aval de l'ouverture (58) de réintroduction du produit sec.

9. Installation selon la revendication 7 ou 8, caractérisée en ce qu'elle comporte un silo auxiliaire raccordé au conduit (59b) du broyeur (57) et relié à ce dernier en amont de la vis d'alimentation (52) de l'écluse d'alimentation (50).

10. Installation selon les revendications 7 à 9, caractérisée en ce que les arbres horizontaux (19, 20) sont entraînés en rotation dans le même sens et à la même vitesse et sont espacés l'un de l'autre d'une distance légèrement supérieure à la hauteur des pales (25, 26).

11. Installation selon les revendications 7 à 10, caractérisée en ce que chaque pale (25, 26) est formée d'une plaque allongée, en forme générale de trapèze, fixée sur l'arbre par la petite base du trapèze, de manière que l'axe de la pale coïncide avec un rayon d'une section transversale de l'arbre et que le plan de chaque pale (25, 26) fasse un même angle (alpha) avec l'axe de l'arbre, cet angle étant inversé d'un arbre à l'autre.

12. Installation selon les revendications 7 à 11, caractérisée en ce que, pour chaque arbre (19, 20), on passe d'une pale (25, 26) à la suivante par une rotation de même sens pour les deux arbres et d'un angle de 90° autour de l'axe de cet arbre et en ce que les arbres (19, 20) sont calés angulairement l'un par rapport à l'autre de manière qu'à chaque pale (25) de l'un (19) des arbres corresponde, à proximité immédiate, une pale (26) de l'autre arbre, d'axe parallèle à celui de ladite pale (25) et de même orientation par rapport à l'arbre, les pales des deux arbres se correspondant ainsi par groupes de deux.

13. Installation selon la revendication 12, caractérisée en ce que les arbres (19, 20) sont décalés axialement l'un par rapport à l'autre de manière que, pour chaque groupe de deux pales (25, 26), les plans balayés par les bords de fuite, ou bords arrière, des pales dans leur rotation soient de part et d'autre et très proches d'un plan transversal commun (P).

14. Installation selon les revendications 7 à 13, caractérisée en ce que l'enveloppe intérieure (32) de la cuve à double paroi (1) épouse, avec un léger jeu dans sa partie inférieure (33), le contour du volume balayé par les pales (25, 26), tandis que ses parois latérales verticales (34), sont sensiblement tangentes à ce volume.

15. Installation selon les revendications 7 à 14, caractérisée en ce que les injecteurs (9) consistent en une série de tubes (35 à 38) descendant verticalement d'un répartiteur (8) jusqu'au voisinage du fond (33) de la cuve (1) et sont disposés dans des plans transversaux parallèles entre deux groupes consécutifs de pales (25, 26).

16. Installation selon la revendication 15, caractérisée en ce que, dans chaque plan transversal, les injecteurs (9) comprennent deux tubes (35, 36) disposés entre les arbres (19, 20) et, de part et d'autre de ceux-ci, deux autres tubes (37, 38), l'ensemble des tubes étant réunis transversalement et longitudinalement par des entretoises (40).

17. Application d'une installation selon les revendications 7 à 16, au traitement de déchets organiques constitués par des boues résiduaires de stations d'épuration.

## Claims

1. Method for drying organic waste comprising a dehydration using a heat-entraining gaseous flow divided into two individual flows, the first of said individual flows providing indirect reheating of the mass of organic waste in a vessel, the second said individual flow being injected into said mass during mechanical agitation thereof, said method including the four following phases:
- a first phase comprising a filling-mixing stage consisting of mixing a mass of organic waste to be treated with dry product originating from treatment, enabling, at the end of said vessel-filling operation, a product mass to be obtained consisting of dry product and fresh slurry, intimately mixed and having a friable and porous texture;
- a second phase constituting a dehydration-bulking phase in which dehydration is provided by said heat-entraining gas flow and in which the mass of water evaporated is progressively replaced by an equivalent volume of fresh slurry in order to maintain the level of matter constant at its maximum vaue within said vessel;
- a third phase constituting a dehydration-finishing phase wherein dehydration of said mass is terminated until the required degree of dryness of the dehydrated product is obtained;
- a fourth phase comprising a vessel-emptying phase during which a part of the dehydrated product obtained is nevertheless left in the bottom of said vessel for the following cycle during which mixing with fresh slurry introduced during said first phase will be performed.

2. Method according to claim 1, characterized in that in the said dehydration-bulking phase, the organic waste is supplied at a variable flow rate.

3. Method according to claim 1 or 2, characterized in that during the filling-mixing and dehydration-bulking phases, only a small flow rate of dry or friable-state product contained in said vessel is extracted for return, after passing through a grinder/sizer, to the fresh product feed screw acting as a mixer.

4. Method according to claim 1 or 2, characterized in that during the filling-mixing and dehydration-bulking phases, the dry product introduced by said fresh product feed screw acting as a mixer is taken from an auxiliary silo filling of which is carried out at the end of each cycle by an extraction screw.

5. Method according to claims 1 to 4, characterized in that in the first phase comprising filling-mixing, feed is carried out under full operating conditions.

6. Method according to claims 1 to 4, characterized in that in said second phase comprising dehydration-bulking, said feed is switched to reduced feed operating conditions.

7. Plant for carrying out the method according to claims 1 to 6, comprising a vessel adapted to receive the mass of waste to be treated and containing mixing means for said waste, heating means for said waste by means of a heat-entraining gas flow originating from a generator, said heating means consisting of a first gas flow circulating in the double wall of said vessel and a second gas flow circulating within said mass during mixing, characterized in that the mixing means comprise two horizontal parallel shafts (19, 20) disposed substantially symmetrically with respect to the vertical plane of symmetry of said vessel (1) and comprising radial vanes (25, 26) of uniform height, regularly spaced on said shaft at the same spacing, in that said two shafts are coupled in rotation to a motor unit (30), in that said heating means comprise a series of injectors (9) originating from a distributor (8) supplied with heat-entraining gas, disposed at the upper portion of said vessel and descending between said planes down to the region of the base (33) of said vessel, in that the vessel (1) includes, at the upper part thereof, a loading aperture (2) linked via a rotary feed lock (50) providing relative sealing between the inlet and outlet faces thereof, to a variable-speed feed screw (52) supplied from a silo (53) for fresh material to be treated, and in that a discharge aperture (3) at the base of said vessel is associated with an extraction screw (54) located in an inclined double housing (54)a leading the discharged matter to a lock (55) from which two conduits originate: one of said conduits (59a) being directed towards said storage silo (62) and the other (59b) towards a grinder (57) discharaging into said feed screw linked to said rotary feed lock (50).

8. Plant according to claim 7, characterized in that said feed screw (52) consists of a mixing screw with two parallel rotors, downstream of the opening (58) for introduction of fresh product.

9. Plant according to claim 7 or 8, characterized in that it includes an auxiliary silo connected to the conduit (59b) of said grinder (57) and linked thereto upstream of the feed screw (52) of the rotary feed lock (50).

10. Plant according to claim 7 to 9, characterized in that the said horizontal shafts (19, 20) are driven in rotation in the same direction and at the same speed and are spaced from each other by a distance that is slightly greater than the height of said vanes (25, 26).

11. Plant according to claims 7 to 10, characterized in that each vane (25, 26) is formed from an alongated plate of a general trapezoidal shape fixed onto said shaft by the small side of said trapezoidal shape, whereby the axis of said vane coincides with a radius of a cross-section of said shaft and the plane of each vane (25, 26) forms the same angle (alpha) with the axis of said shaft, said angle being reversed from one shaft to the next.

12. Plant according to claims 7 to 11, characterized in that, for each shaft (19, 20) passage from one vane (25, 26) to the next one is achieved by rotation in the same direction of the two shafts through an angle of 90° about the axis of this shaft, and in that the shafts (19, 20) are angularly phased with respect to each other whereby each vane (25) of one (19) of said shafts corresponds, in the immediate proximity thereof, to one vane (26) of the other shaft, with its axis parallel to the axis of said first vane (25) and with the same orientation with respect to the shaft, said vanes of the two shafts thus corresponding by sets of two.

13. Plant according to claim 12, characterized in that the shafts (19, 20) are axially offset with respect to each other whereby, for each group of two vanes (25, 26), the planes swept by the trailing or rear edges of said vanes during their rotation are situated at either side of, and very close to, a common transverse plane (P).

14. Plant according to claims 7 to 13, characterized in that the inner housing (32) of said double walled vessel (1) follows, with slight spacing, at the inner portion thereof (33), the contour of the volume swept by said vanes (25, 26), the vertical lateral walls (34) thereof being substantially tangential to said volume.

15. Plant according to claims 7 to 14, characterized in that said injectors (9) consist of a series of tubes (35 to 38) descending vertically from a distributor (8) down to a position close to the base (33) of said vessel (1) and are arranged in transverse parallel planes between two consecutive sets of vanes (25, 26).

16. Plant according to claim 15, characterized in that in each transverse plane, the injectors (9) comprise two tubes (35, 36) disposed between said shafts (19, 20) and two other tubes (37, 38) at either side thereof, the complete set of tubes being joined transversally and longitudinally by bracing elements (40).

17. Application of a plant according to claims 7 to 16 to the treatment of organic waste consisting of purifying station residual slurries.

## Patentansprüche

1. Verfahren zum Trocknen von organischen Abfällen, welches aus einer Entwässerung mit Hilfe eines wärmetragenden Gasflusses, der in zwei Ströme geteilt ist, wobei der erste Strom zum indirekten Aufwärmen der Masse an organischen Abfällen in einem Behälter dient, und der zweite Strom in die mechanisch geschüttelte Masse eingeblasen wird, besteht, wobei das Verfahren die folgenden vier Phasen beinhaltet:
- einen ersten, "Füll- und Mischschritt" genannten Verfahrensschritt, wobei eine zu behandelnde Masse von organischen Abfällen mit einem aus der Behandlung stammenden trockenen Produkt gemischt wird, was gestattet am Ende des Ausfüllens des Behälters eine aus dem trockenen Produkt und Frischschlamm bestehende brüchige und poröse Masse zu erhalten, bei der die beiden Bestandteile innig mit einander gemischt sind;
- einen zweiten, "Entwässerungs- und Nachfüllschritt" genannten Verfahrensschritt wobei die Entwässerung durch den wärmetragenden Gasfluss bewirkt wird und wobei die Masse des verdunsteten Wassers laufend durch ein äquivalentes Volumen von Frischschlamm ersetzt wird, um den Massenpegel innerhalb des Behälters stets auf seinem Maximalwert zu halten;
- einen dritten, "Entwässerungs-Endschritt" genannten Verfahrensschritt der es gestattet, die Entwässerung der Masse bis zur Erreichung des gewünschten endgültigen Trockenheitsgrades des entwässerten Produkts zu bewirken;
- den vierten, "Behälterentleerungsschritt" genannten Verfahrensschritt, wobei ein Teil des erhaltenen entwässerten Produkts jedoch am Boden des Behälters für den nachfolgenden Verfahrenszyklus zurückgelassen wird, bei welch nachfolgendem Zyklus die Mischung mit dem während des ersten Verfahrensschrittes eingeleiteten Frischschlamm bewirkt wird.

2. Verfahren nach Anspruch 1, dadurch gekennzeichnet, daß während dem Entwässerungs- und Nachfüllschritt die organischen Abfälle mit einer veränderlichen Strömungsmenge eingespeist werden.

3. Verfahren nach Anspruch 1 oder 2, dadurch gekennzeichnet, daß während dem Füll- und Mischschritt und dem Entwässerungs- und Nachfüllschritt nur eine geringe Menge von dem in dem Behälter enthaltenen, trockenen oder brüchigen Produkt ausgetragen wird und dieses Produkt, nachdem dasselbe durch einen Kalibrierzerkleinerer geleitet wurde, zur Frischproduktioneinlass-Schnecke zurückgefördert wird, welch letztere dabei als Mischschnecke wirkt.

4. Verfahren nach Anspruch 1 oder 2, dadurch gekennzeichnet, daß während dem Füll- und Mischschritt und dem Entwässerungs- und Nachfüllschritt das nach Behandlung durch den Kalibrierzerkleinerer zu der als Mischschnecke arbeitenden Frischprodukt-Einleit- oder Zuführungsschnecke geförderte Trockenprodukt in einen Hilfsspeicher bzw. Hilfssilo eingebracht wird, der bei Beendigung eines jeden Zyklus durch eine Austragschnecke gefüllt wird.

5. Verfahren nach den Ansprüchen 1 bis 4, dadurch gekennzeichnet, daß während dem ersten Füll- und Mischschritt genannten Verfahrensschritt die Zufuhr mit dem Maximaldurchsatz durchgeführt wird.

6. Verfahren nach den Ansprüchen 1 bis 5, dadurch gekennzeichnet, daß während dem zweiten Entwässerung- und Nachfüllschritt genannten Verfahrensschritt die Zufuhr auf einen reduziertem Einlassdurchsatz umgeschaltet wird.

7. Anlage zum Durchführen des Verfahrens nach einem der Ansprüche 1 bis 6, welche einen Behälter umfaßt, der die zu behandelnde Abfallmasse aufnimmt und Mittel zum Mischen dieser Abfallstoffe besitzt, sowie Mittel zum Erwärmen der Abfallstoffe durch einen von einem Generator gelieferten Heizgasstrom, wobei diese Mittel zum Erwärmen einen ersten durch die Doppelwandung des Behälters fließenden Gasstrom, sowie einen zweiten Gasstrom umfassen, der durch die Masse fließt, während dieselbe gemischt wird, dadurch gekennzeichnet, daß die Mischmittel zwei horizontale parallele Drehwellen (19, 20) umfassen, welche in bezug auf die vertikale Symmetrie-Ebene des Behälters (1) wesentlich symmetrisch angeordnet sind und sich radial erstreckende abstandsgleiche Flügel (25, 26) mit gleicher Höhe aufweisen, die mit gleichmäßigem Gewindeschritt um jede der Wellen angeordnet sind; daß die beiden Drehwellen zwecks Drehantriebs an eine Antriebseinheit (30) angekuppelt sind; und daß die Mittel zum Erwärmen eine Reihe von Einspritzdüsen (9), die von einem mit Heizgas gespeisten Verteiler (8) ausgehen, der im oberen Teil des Behälters angeordnet ist und sich zwischen den Flügeln bis zur Nähe des Behälterbodens (33) nach unten erstreckt, aufweisen; und dadurch, daß der Behälter (1)in seinem oberen Teil eine Einfüllöffnung (2) aufweist die mittels einer Drehspeiseschleuse (50), die eine relative Abdichtung zwischen ihrer Einlass- und Auslassseite bewirkt, an einer mit regelbarer Geschwindigkeit (52) versehenen Speiseschnecke und die mit zu behandelndem frischen Stoff aus einem Speicher (53) gespeist ist, angeschlossen wird, und dadurch, daß eine im Boden des Behälter befindliche Auslassöffnung (3) einer in einer schrägen Doppelumhüllung (54a) gelagerten Austragsschnecke (54) zugeordnet ist, die den abgezogenen Stoff in Richtung einer Schleuse (55) führt aus der zwei Leitungen abgezweigt sind: eine Leitung (59a) in Richtung eines Speisesilos (62) und die andere (59b) in Richtung eines sich auf die an der Drehspeiseschleuse (50) angeschlossenen Speiseschnecke entladenden Zerkleinerers (57)

8. Anlage nach Anspruch 7, dadurch gekennzeichnet, daß die Speiseschnecke (52) aus einer zwei parallele Rotoren aufweisende Mischschnecke besteht, die stromabwärts der Wiedereinfüllöffnung (58) für das Trockenprodukt angeordnet ist.

9. Anlage nach Anspruch 7 oder 8, dadurch gekennzeichnet, daß sie einen Hilfsspeicher enthält, der an die Leitung (59b) des Zerkleinerers (57) stromaufwärts der Speiseschnecke (52) der Drehspeiseschleuse (50) angeschlossen ist.

10. Anlage nach den Ansprüchen 7 bis 9, dadurch gekennzeichnet, daß die waagerechten Drehwellen (19, 20) im gleichen Drehsinn und mit gleicher Geschwindigkeit gedreht werden und von einander um einen Abstand entfernt sind, der etwas größer ist, als die Höhe der Flügel (25, 26).

11. Anlage nach den Ansprüchen 7 bis 10, dadurch gekennzeichnet, daß jeder Flügel (25, 26) aus einer länglichen Platte besteht, die wesentlich trapezförmig und an der Drehwelle mit der kleineren Trapezbasis-Seite befestigt ist, derart, daß die Achse des Flügels mit einem Radius des Drehwellenquerschnitts zusammenfällt und daß die Ebene eines jeden Flügels (25, 26) mit der Drehwellenachse den gleichen Winkel (alpha) bildet, wobei dieser Winkel bei jeder Drehwelle in bezug auf denjenigen der anderen Drehwelle umgekehrt ist.

12. Anlage nach den Ansprüchen 7 bis 11, dadurch gekennzeichnet, daß bei jeder Drehwelle (19, 20) der Übergang von einem Flügel (25, 26) zum nächsten Flügel durch eine Umdrehung gleichen Drehsinns beider Wellen erfolgt, wobei der Drehwinkel um die geometrische Achse 90° beträgt, und daß die Drehwellen (19, 20) aneinander winkelmässig derart angeordnet sind, daß jeder Flügel (25) der einen Welle (19) bei gleicher Flügelausrichtung in bezug auf die Welle in unmittelbarer Nähe einem Flügel (26) der anderen Welle, deren Achse parallel zur Achse des ersten Flügels wird, entspricht, sodaß die beiden Flügel der beiden Wellen einander in Zweiergruppen entsprechen.

13. Vorrichtung nach Anspruch 12, dadurch gekennzeichnet, daß die Drehwellen (19, 20) axial gegeneinander versetzt angeordnet sind, derart, daß für jeweils zwei Flügel (25, 26) die von den Hinterkanten der sich drehenden Flügel bestrichenen Ebenen beiderseits in Nähe einer gemeinsamen Querebene (P) liegen.

14. Vorrichtung nach den Ansprüchen 7 bis 13, dadurch gekennzeichnet, daß der Innenmantel (32) des doppelwandigen Behälters (1) an seinem unteren Teil (33) mit leichtem Spielraum dem Umriß des von den Flügeln (25, 26) bestrichenen Volumens folgt, während seine vertikalen Seitenwandungen (34) in bezug auf dieses Volumen wesentlich tangential angeordnet sind.

15. Vorrichtung nach Ansprüchen 7 bis 14, dadurch gekennzeichnet, daß die Einspritzdüsen (9) aus einer Gruppe von Rohren (35, 38) bestehen, die sich von einem Verteiler (8) aus vertikal bis in die Nähe des Behälterbodens (33) nach unten erstrecken und zwischen zwei benachbarten Flügelgruppen (25, 26) in parallelen Querebenen angeordnet sind.

16. Vorrichtung nach Anspruch 15, dadurch gekennzeichnet, daß die Einspritzdüsen (9) in jeder Querebene zwei zwischen den Drehwellen (19, 20) angeordnete Rohre (35, 36) sowie beiderseits derselben angeordnete Rohre (37, 38) umfassen, wobei diese Rohre durch Zwischenstücke (40) quer und längs miteinander verbunden sind.

17. Anwendung einer Vorrichtung nach den Ansprüchen 7 bis 16, zur Behandlung von aus verbleibendem Schlamm von Reinigungsanlagen stammenden organischen Abfällen.
